# EUROPÄISCHE PATENTSCHRIFT

(11) **EP 3 310 537 B1**
(45) Veröffentlichungstag und Bekanntmachung des Hinweises auf die Patenterteilung: **23.10.2019**
(21) Anmeldenummer: 16731859.1
(22) Anmeldetag: 22.06.2016
(51) Int. Cl.: B25J 9/16

(54) **VERBESSERUNG DER TEMPERATURDRIFTKOMPENSATION DURCH GEREGELTE ÜBERKOMPENSATION**
IMPROVING THE TEMPERATURE DRIFT COMPENSATION BY CONTROLLED OVER-COMPENSATION
AMÉLIORATION DE LA COMPENSATION DE LA DÉRIVE THERMIQUE PAR SURCOMPENSATION RÉGULÉE

(30) Priorität: 22.06.2015 DE 102015211407
(43) Veröffentlichungstag der Anmeldung: 25.04.2018
(73) Patentinhaber: KUKA Deutschland GmbH, 86165 Augsburg (DE)
(72) Erfinder: MITTMANN, Ralf, 86415 Mering (DE); KADERK, Sebastian, 86199 Augsburg (DE); HAGER, Markus, 86199 Augsburg (DE); MILLER, Robert, 86937 Scheuring (DE); PURRUCKER, Thomas, 80689 München (DE); GROLL, Michael, 86399 Bobingen (DE)
(74) Vertreter: Tillmann, Axel
(86) Internationale Anmeldenummer: PCT/EP2016/064357
(87) Internationale Veröffentlichungsnummer: WO 2016/207188

(56) Entgegenhaltungen:
- EP-A1- 2 722 136
- WO-A2-99/60452

## Beschreibung

### 1. Technischer Bereich

Die vorliegende Erfindung betrifft ein Verfahren zur Korrektur eines Manipulator-Parameters.

### 2. Technischer Hintergrund

Roboter, und insbesondere Industrieroboter sind automatisch gesteuerte, frei programmierbare Mehrzweck-Manipulatoren. Sie sind dabei für den Einsatz im industriellen Umfeld konzipiert und können so in unterschiedlichen Bereichen einer Fertigungsanlage eingesetzt werden. So kann ein Industrieroboter beispielsweise eingesetzt werden, um in einer Bearbeitungsstation oder Vermessungsstation ein oder mehrere Messpunkte eines Bauteils zu vermessen, oder an einem Werkstück ein bestimmtes Bahnprogramm abzufahren und dabei das Werkstück bzw. Bauteil mittels beispielsweise eines Falzwerkzeugs zu bearbeiten.

Vor dem Einsatz muss der Industrieroboter üblicherweise kalibriert werden, um ein vollständiges kinematisches Modell des Roboters zu erhalten. Hierzu müssen verschiedene Parameter der Robotermechanik ermittelt werden, um letztendlich ein vollständiges Robotermodell zu erhalten. Außerdem muss der Roboter in Bezug auf das zu vermessende oder zu bearbeitende Bauteil ausgerichtet werden: Dabei muss ein Bezug von dem Koordinatensystem des Roboters zum Koordinatensystem der Arbeitsstation bzw. dem Bauteil hergestellt werden. Hierzu können beispielsweise Referenzpunkte angefahren werden, die einen festen Punkt im Raum darstellen. Ein Referenzpunkt kann z.B. optisch gelesen werden, oder auch manuell von einem Roboter angefahren werden. Da die Position eines Referenzpunktes im Weltkoordinatensystem definiert ist, kann durch Erfassen des Referenzpunktes beispielsweise die genaue Position eines Endeffektors des Roboters mittels entsprechender Transformationen zwischen dem Roboter-Koordinatensystem und dem Weltkoordinatensystem bestimmt werden.

Durch Reibung in den mechanischen Elementen eines Roboters und durch die Abwärme elektrischer Komponenten verändert sich die Temperatur der Robotermechanik. Dies kann zu einer Größenänderung der einzelnen Elemente führen, als auch eine Änderung der Viskosität von Flüssigkeiten und Änderungen der Elastizität von Elementen, wie beispielsweise dem Getriebe, mit sich bringen. Wenn die Parameter des Robotermodells nicht zyklisch aktualisiert werden, ergibt sich eine sogenannte Drift in der Positionierung des Roboters, welche die Wiederhol- und Absolutgenauigkeit des Roboters überlagert. Diese Drift ist an einem festen Bezugskörper, oder Referenzkörper, mit bekannten bzw. vermessenen Positionen messbar.

Aus einem betriebsinternen Verfahren ist bekannt, bei der Kalibrierung einen optimierten Modellparametersatz zu ermitteln. Der Modellparametersatz bzw. das parametrisierbare mathematische Robotermodell wird dabei für die Steuerung des Manipulators verwendet. Um den optimierten Modellparametersatz zu ermitteln werden Abweichungen der Positionierung des Roboters an einem temperaturstabilen Kalibrierkörper gemessen. Die Optimierung erfolgt dann mittels Minimierung des Restfehlers der Positionierung. Da sich der Effekt der Temperaturdrift an unterschiedlichen Posen unterschiedlich stark auswirkt, wird versucht, über Extremposen des Manipulators möglichst stark variierende und einen großen Achsbereich abdeckende Achsstellung zu bestimmen. Allerdings werden so nur die Effekte kompensiert, die sich bei den Messungen an dem Kalibierkörper ergeben. Effekte, die durch die Temperaturänderung der Kinematik hervorgerufen werden, können allerdings nicht durch die Roboterposen am Kalibrierkörper abgebildet werden und werden somit nicht kompensiert.

Im Laufe eines typischen Messzyklus wird ein Bauteil in eine Messzelle eingeschleust, vermessen und anschließend wieder ausgeschleust. Hierbei erwärmt sich der Roboter. Folglich passen die zu Beginn des Zyklus bestimmten Parameter des Robotermodells im Laufe des Zyklus immer schlechter zur tatsächlichen Positionierung des Roboters. Folglich ist spät im Zyklus eine höhere Restdrift an den gemessenen Punkten zu erwarten.

Die Gültigkeit des optimierten Parametersatzes für den gesamten Arbeitsraum basiert auf der Annahme, dass eine Auswahl von Extremposen alle Temperatureffekte aufzeigt. Diese Herangehensweise birgt allerdings die Gefahr, dass Teile des Arbeitsraums nicht mit abgedeckt sind oder temperaturabhängige Effekte generell nicht berücksichtigt werden. Dies führt zu einer sichtbaren Restdrift an den Bauteilpunkten. Diese Restdrift am Bauteil setzt sich dabei aus nicht kompensierten, temperaturabhängigen Einflüssen auf die Positionierung als auch eine Temperaturdrift durch Erwärmung der Kinematik seit der letzten Kalibrierung zusammen.

Die Druckschrift WO 99/60452 A2 offenbart ein Verfahren zur Verringerung thermischer Einflussgrößen bei einem Industrieroboter.

Der vorliegenden Erfindung liegt somit die Aufgabe zugrunde, ein Verfahren und ein Robotersystem bereitzustellen, welche die oben aufgeführten Nachteile - zumindest teilweise - minimieren. Es ist ferner eine Aufgabe der vorliegenden Erfindung, die Präzision eines Roboters oder Manipulators zu erhöhen. Diese und weitere Aufgaben werden durch den Gegenstand der Hauptansprüche gelöst.

### 3. Inhalt der Erfindung

Die vorliegende Erfindung umfasst ein Verfahren zur Korrektur eines Manipulator-Parameters. Dabei eignet sich dieser Manipulator-Parameter insbesondere zum Steuern eines Manipulators, bzw. kann ein Manipulator zumindest anhand des Manipulator-Parameters gesteuert werden. Der Fachmann versteht, dass ein oder mehrere Manipulator-Parameter nötig sein können, um einen Manipulator zu steuern. Das vorliegende Verfahren zur Korrektur eines Manipulator-Parameters kann dementsprechend zur Korrektur eines oder mehrerer solcher Manipulator-Parameter verwendet werden.

Das erfindungsgemäße Verfahren weist ein Bestimmen einer zeitlichen Änderung des Manipulator-Parameters auf. Es kann hierbei auch von der ersten zeitlichen Ableitung des Manipulator-Parameters gesprochen werden. Dabei wird vorzugsweise die Änderung des Manipulator-Parameters während eines vorangegangenen Zyklus bzw. Arbeitszyklus, und weiter vorzugsweise während des unmittelbar vorangegangenen Arbeitszyklus bestimmt. Der Fachmann versteht, dass die Änderung des Parameters beispielsweise aufgrund einer Temperaturerhöhung des Manipulators hervorgerufen sein kann. Insbesondere kurz nach dem Einschalten eines Manipulators kann es zu starken Temperaturerhöhungen des Manipulators kommen, wodurch wiederum die Genauigkeit des Manipulators bzw. die Genauigkeit der Manipulator-Parameter abnimmt. Somit ist ein anpassen der Manipulator-Parameter zu Beginn eines jeden Arbeitszyklus notwendig.

Das erfindungsgemäße Verfahren weist ferner ein Berechnen einer Überkompensation basierend auf zumindest der zeitlichen Änderung des Manipulator-Parameters auf. Basierend auf dieser Überkompensation wird in einem weiteren Schritt des erfindungsgemäßen Verfahrens der Manipulator-Parameter korrigiert. Mit dem vorliegenden Verfahren wird somit der Manipulator-Parameter entsprechend z.B. einer Temperaturdrift oder eines Ist-Zustandes des Manipulators nicht nur kompensiert, sondern weiterhin überkompensiert. Das Ausmaß dieser Überkompensation ist dabei zumindest abhängig von der zeitlichen Änderung des Manipulator-Parameters vorzugsweise während des vorangegangenen Zyklus. Da die Änderung des Manipulator-Parameters zu Beginn eines jeden Zyklus vorzugsweise auch von dem Ist-Zustand des Manipulators abhängt, kann durch die Berücksichtigung der vorangegangenen Änderungen des Manipulator-Parameters eine geeignete Überkompensation eingestellt werden, sodass Abweichungen aufgrund beispielsweise weiterer Temperaturerhöhungen während des aktuellen Zyklus verringert werden.

Der Fachmann versteht, dass der ideale Manipulator-Parameter zu Beginn eines Zyklus verschieden sein kann von dem idealen Manipulator-Parameter am Ende eines Zyklus. Somit erlaubt es die vorliegende Erfindung, den Manipulator-Parameter zu Beginn eines Zyklus nicht genau auf den idealen (Momentan-)Manipulator-Parameter zu Beginn des Zyklus zu setzen, sondern auf einen überkompensierten Wert. Diese Überkompensation ist dabei vorzugsweise höher bzw. größer als eine Differenz zwischen dem unkorrigierten, zu Zyklusbeginn vorliegenden (Ist-)Manipulator-Parameter (welcher beispielsweise zu Beginn eines vorangegangenen Zyklus festgelegt wurde) und dem idealen (Momentan-)Manipulator-Parameter zu Zyklusbeginn. Wenn die Abweichung zwischen diesem unkorrigierten Manipulator-Parameter und idealen Manipulator-Parameter zu Zyklusbeginn x beträgt, wird mittels des erfindungsgemäßen Verfahrens der Manipulator-Parameter um beispielsweise 2x korrigiert, abhängig von der bestimmten zeitlichen Änderung des Manipulator-Parameters. Obwohl somit der korrigierte Manipulator-Parameter zu Zyklusbeginn weiterhin um x von dem idealen Manipulator-Parameter zu Zyklusbeginn abweicht, kann sich diese Abweichung x während des Zyklus verringern, da der zeitliche Verlauf des idealen Manipulator-Parameters üblicherweise nicht konstant ist. Somit kann vorteilhaft eine derartige Korrektur eingestellt werden, dass ein Fehlerquadrat-Integral zwischen zwei Korrekturen minimal ist.

Somit ist die Überkompensation vorzugsweise größer als eine Differenz zwischen einem unkorrigierten Manipulator-Parameter (etwa zu Beginn eines Zyklus) und einem idealen Manipulator-Parameters (etwa zu Beginn eines Zyklus), sodass der korrigierte Manipulator-Parameter verschieden von dem idealen Manipulator-Parameter ist.

Wenn im vorangegangenen Zyklus beispielsweise eine starke Änderung des Manipulator-Parameters festgestellt werden konnte, also der Manipulator-Parameter sich zu Beginn und zum Ende des Zyklus deutlich unterschied, wird zu Beginn des aktuellen Zyklus der Manipulator-Parameter nicht nur entsprechend dem momentanen Zustand des Manipulators korrigiert, sondern überkorrigiert. Folglich weist der Manipulator-Parameter zum aktuellen Zyklus eine Abweichung von dem idealen Manipulator-Parameter zu Beginn des Zyklus auf, entspricht diesem aber zu einem bestimmten Punkt während des Zyklus und weicht wieder von diesem ab am Ende des Zyklus. Durch diese Überkompensation ist die Abweichung des realen diskreten Parameterverlaufs vom idealen stetigen Verlauf um ca. die Hälfte geringer.

Besonders bevorzugt wird das erfindungsgemäße Verfahren mit anderen Techniken ausgeführt, mit denen zu Beginn eines Arbeitszyklus Modellparameter optimiert werden. Dies kann beispielsweise anhand eines temperaturstabilen Kalibrierkörpers erfolgen, wie aus dem Stand der Technik bekannt. Mit der vorliegenden Erfindung wird Mittels der Überkompensation der Modellparameter dahingehend optimiert, dass er über den Arbeitszyklus hinweg eine möglichst genaue Positionierung des Manipulators ermöglicht.

Vorzugsweise weist das erfindungsgemäße Verfahren weiterhin ein Bestimmen einer zeitlichen Änderung der zeitlichen Änderung des Manipulator-Parameters auf. Es wird somit neben der zeitlichen Änderung des Manipulator-Parameters auch die zeitliche Änderung der zuvor bestimmten zeitlichen Änderung des Manipulator-Parameters bestimmt. Es kann hierbei auch von der zweiten zeitlichen Ableitung des Manipulator-Parameters gesprochen werden. Ferner basiert gemäß dem erfindungsgemäßen Verfahren das Berechnen der Überkompensation folglich sowohl auf der zeitlichen Änderung des Manipulator-Parameters als auch auf der zeitlichen Änderung der zeitlichen Änderungen des Manipulator-Parameters.

Die zeitliche Änderung der zeitlichen Änderung des Manipulator-Parameters kann auch als die Parameteränderungsgeschwindigkeit angesehen werden und entspricht der zweiten Ableitung eines stetigen Parameterverlaufs. Durch Berücksichtigung der Parameteränderungsgeschwindigkeit kann die Überkompensation der Temperaturdrift sehr präzise ermittelt werden, so dass die gesamte Abweichung des Manipulator-Parameters während des aktuellen Zyklus vom idealen Parameterverlauf noch weiter minimiert werden kann. Je nach Zyklusdauer und beispielsweise Temperaturänderung des Manipulators kann der Manipulator-Parameter somit optimaler korrigiert werden.

Vorzugsweise wird das erfindungsgemäße Verfahren zu Beginn eines Arbeitszyklus durchgeführt. Somit wird zu Beginn des Arbeitszyklus der Manipulator-Parameter nicht dahingehend korrigiert, dass er einem zu Zyklusbeginn optimalen Wert entsprechen muss, sondern derart überkompensiert, dass die gesamte Abweichung des Manipulator-Parameters vom optimalen Verlauf während des gesamten Zyklus minimal ist.

Weiterhin vorzugsweise basiert das Bestimmen der zeitlichen Änderung des Manipulator-Parameters und/oder das Bestimmen der zeitlichen Änderung der zeitlichen Änderung des Manipulator-Parameters auf erfassten Manipulator-Parametern von vorangegangenen Arbeitszyklen. Hierzu können die Manipulator-Parameter der entsprechenden vorangegangenen Arbeitszyklen in einer Steuerung oder separat hierzu bereitgestellt oder gespeichert sein. Somit wird zu jedem Arbeitszyklus vorteilhaft ein Manipulator-Parameter erfasst und in den folgenden Arbeitszyklen zur Berechnung einer entsprechenden Überkompensation verwendet.

Der Fachmann versteht, dass die erfindungsgemäße Korrektur eines Manipulator-Parameters, welche zumindest auf einer bestimmten zeitlichen Änderung des Manipulator-Parameters basiert, auch mit anderen Methoden zur Korrektur von Parametern oder Kompensation einer Temperaturdrift kombiniert werden kann. Durch das erfindungsgemäße Verfahren wird allerdings die Positioniergenauigkeit eines Roboters bzw. Manipulators weiter verbessert. Dabei kann beispielsweise eine hohe Genauigkeit von besser als + 0,15 mm erreicht werden. Mit der erfindungsgemäßen Methode wird der Restfehler minimiert, welcher durch Unstetigkeiten im Parameterverlauf verursacht wird.

Die vorliegende Erfindung umfasst ferner die Verwendung des erfindungsgemäßen Verfahrens zur Korrektur eines Manipulator-Parameters zur Korrektur von Manipulator-Parametern. Weiterhin betrifft die vorliegende Erfindung ein System, welches einen Manipulator als auch eine Steuerung aufweist, wobei die Steuerung eingerichtet ist, einen Manipulator anhand zumindest eines Manipulator-Parameters zu steuern. Das System weist dabei ferner Mittel zur Durchführung des erfindungsgemäßen Verfahrens zur Korrektur des Manipulator-Parameters auf. Ferner umfasst die vorliegende Erfindung ein computerlesbares Medium, welches Instruktionen enthält, welche, wenn durch ein Verarbeitungssystem ausgeführt, Schritte zum Steuern eines Manipulators ausführt, entsprechend dem erfindungsgemäßen Verfahren zur Korrektur eines Manipulator-Parameters.

### 4. Ausführungsbeispiel(e)

Im Folgenden wird die vorliegende Erfindung anhand der beiliegenden Figuren näher beschrieben. Es zeigt:
Fig. 1 den Verlauf eines Parameters mit einer Temperaturdriftkompensation gemäß dem Stand der Technik, und
Fig. 2 den Verlauf eines Parameters mit einer erfindungsgemäßen Korrektur.

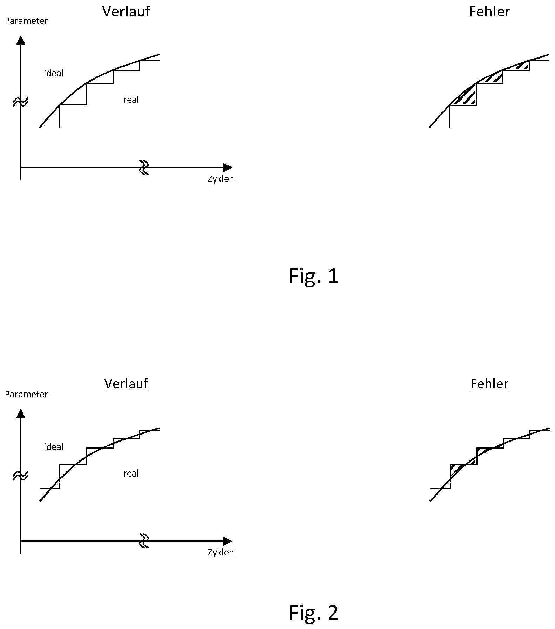

In Fig. 1 und 2 sind jeweils der Verlauf eines Parameters über mehrere Zyklen dargestellt. Der Parameter ist dabei ein Manipulator-Parameter, welcher zum Steuern eines Parameters dient. In den Figuren zeigen die stetigen Linien den idealen Verlauf des Parameters über die Zyklen hinweg an. Der Parameter ändert sich aufgrund temperaturabhängiger Effekte, wie sie beispielsweise während der Aufwärmphase eines Manipulators auftreten. Besonders zu Beginn der Aufwärmphase kann der Temperaturanstieg sehr steil sein. Folglich liegt eine starke Zeitabhängigkeit des Manipulator-Parameters vor. Im besten Fall würde der aktuelle verwendete Manipulator-Parameter zu jedem Zeitpunkt mit dem ideellen Parameter übereinstimmen.

Wie auch in Fig. 1 dargestellt, wird üblicherweise zu Beginn eines Zyklus der Manipulator-Parameter derart angepasst, dass er dem idealen Wert entspricht. Hierfür können gängige Temperaturdriftkompensationen beispielsweise eingesetzt werden. Dieser angepasste Manipulator-Parameter bleibt dann während eines Arbeitszyklus konstant. Somit ergibt sich die dargestellt Stufenfunktion des realen Parameterverlaufs. Da also während des Zyklus der Parameter konstant bleibt, entfernt er sich immer mehr vom idealen Wert, da der ideale Parameter nicht konstant bleibt, sondern steigt. Gerade in der Aufwärmphase des Roboters ergeben sich somit erhebliche Abweichungen. Nur zu Beginn des Zyklus passt der gewählte Parameter bzw. Parametersatz zur Realität, da sich die Parameter innerhalb des Zyklus nicht stetig ändern.

Aufgrund der Abweichung des Ist-Manipulator-Parameters vom idealen Wert ergibt sich ein Fehler, welcher als schraffierte Fläche in Fig. 1 dargestellt ist. Wie deutlich zu erkennen ist, ist der Fehler umso größer, je stärker der ideale Parameterverlauf steigt.

In Fig. 2 ist der ideale stetige Verlauf des Parameters als auch der reale Parameterverlauf dargestellt, wobei der Manipulator-Parameter entsprechend des erfindungsgemäßen Verfahrens zu Beginn eines Zyklus überkompensiert wurde. Wie deutlich aus Fig. 2 erkennbar, stimmt der reale Manipulator-Parameter zu Beginn eines Zyklus nicht mit dem realen Wert überein. Erst im Laufe des Zyklus kreuzen sich der reale und ideale Parameterverlauf. Zu diesem Zeitpunkt stimmen sie überein. Zum Ende des Zyklus liegen wieder Abweichungen zwischen dem realen und idealen Parameterverlauf vor.

Im Vergleich zu dem Parameterverlauf in Fig. 1 sind die Abweichungen zwischen dem realen diskreten Parameterverlauf und dem idealen stetigen Verlauf unter Anwendung des erfindungsgemäßen Verfahrens deutlich geringer. Dies ergibt sich erneut durch Betrachtung der schraffierten Flächen, welche in der Fig. 2 deutlich kleiner sind als in der Fig. 1.

Zur Durchführung der erfindungsgemäßen Korrektur kann beispielsweise ein Parameter mit einem Faktor k multipliziert werden. Dies kann zusätzlich zu weiteren Methoden, wie beispielsweise einer Temperaturdriftkompensation durchgeführt werden. Bei der Annahme eines linearen Verlaufs des stetigen Parameterverlaufs über einen Arbeitszyklus hinweg, lässt sich zeitliche Änderung des Manipulator-Parameters durch den Quotienten aus der Parameteränderung während eines Zyklus und der Dauer des Zyklus ausdrücken.

Die Parameteränderungsgeschwindigkeit hingegen entspricht der zweiten Ableitung des stetigen Parameterverlaufs. Stark vereinfacht lässt sich dieser als die Differenz der Parameteränderung des aktuellen und des vorangegangenen Zyklus darstellen.

Bei der Verwendung von Fuzzysets zur Entwicklung der Regelung können im Gegenteil zu digitalen Schaltungssystem auch Übergänge der einzelnen Zustände abgebildet werden. Der Reglerentwurf erfolgt durch eine Beschreibung der Zusammenhänge in Form von Regeln. Diese Regeln basieren auf Erfahrungswerten. Eine konkrete mathematische Beschreibung ist nicht erforderlich, was die Auslegung des Reglers massiv vereinfacht.

## Patentansprüche

1. Verfahren zur Korrektur eines Manipulator-Parameters, wobei ein Manipulator zumindest anhand des Manipulator-Parameters gesteuert wird, aufweisend:
- Bestimmen einer zeitlichen Änderung des Manipulator-Parameters;
- Berechnen einer Überkompensation basierend auf zumindest der zeitlichen Änderung des Manipulator-Parameters, und
- Korrigieren des Manipulator-Parameters basierend auf der Überkompensation.

2. Verfahren nach Anspruch 1, weiterhin aufweisend:
Bestimmen einer zeitlichen Änderung der zeitlichen Änderung des Manipulator-Parameters, und
wobei das Berechnen der Überkompensation weiterhin auf der zeitlichen Änderung der zeitlichen Änderung des Manipulator-Parameters basiert.

3. Verfahren nach Anspruch 1 oder 2, wobei das Verfahren zu Beginn eines Arbeitszyklus des Manipulators durchgeführt wird.

4. Verfahren nach einem der vorangegangenen Ansprüche, wobei das Bestimmen der zeitlichen Änderung des Manipulator-Parameters und/oder das Bestimmen der zeitlichen Änderung der zeitlichen Änderung des Manipulator-Parameters auf erfassten Manipulator-Parametern von vorangegangenen Arbeitszyklen basieren.

5. Verfahren nach einem der vorangegangenen Ansprüche, wobei die Überkompensation größer als eine Differenz zwischen einem unkorrigierten Manipulator-Parameter und einem idealen Manipulator-Parameter ist, sodass der korrigierte Manipulator-Parameter verschieden von dem idealen Manipulator-Parameter ist.

6. Verwendung eines Verfahrens nach einem der vorangegangenen Ansprüche zur Korrektur von Manipulator-Parametern.

7. System aufweisend einen Manipulator und eine Steuerung eingerichtet zum Steuern des Manipulators anhand zumindest eines Manipulator-Parameters, wobei das System ferner Mittel zur Durchführung eines Verfahrens zur Korrektur des Manipulator-Parameters nach einem der Ansprüche 1 - 5 aufweist.

## Claims

1. Method for correcting a manipulator parameter, wherein a manipulator is controlled at least on the basis of the manipulator parameter, comprising:
- determining a temporal change in the manipulator parameter;
- calculating an over-compensation based on at least the temporal change of the manipulator parameter, and
- correcting the manipulator parameter based on the overcompensation.

2. Method of claim 1, further comprising:
Determining a temporal change in the temporal change of the manipulator parameter, and wherein calculating the overcompensation is still based on the temporal change of the temporal change of the manipulator parameter.

3. Method of claim 1 or 2, wherein the method is performed at the beginning of a duty cycle of the manipulator.

4. Method according to one of the preceding claims, wherein determining the temporal change of the manipulator parameter and / or determining the temporal change of the temporal change of the manipulator parameter based on detected manipulator parameters of previous working cycles.

5. Method of claim 1, wherein the overcompensation is greater than a difference between an uncorrected manipulator parameter and an ideal manipulator parameter, such that the corrected manipulator parameter is different than the ideal manipulator parameter.

6. Use of a method according to one of the preceding claims for the correction of manipulator parameters.

7. System comprising a manipulator and a controller configured to control the manipulator based on at least one manipulator parameter, wherein the system further comprises means for performing a method for correcting the manipulator parameter according to any one of claims 1-5.

## Revendications

1. Méthode de correction d'un paramètre de manipulateur, dans lequel un manipulateur est commandé au moins sur la base du paramètre de manipulateur, comprenant:
- déterminer un changement temporel dans le paramètre manipulateur;
- calculer une surcompensation sur la base d'au moins le changement temporel du paramètre manipulateur, et
- corriger le paramètre manipulateur en fonction de la surcompensation.

2. Méthode selon la revendication 1, comprenant en outre:
Détermination d'un changement temporel dans le changement temporel du paramètre manipulateur, le calcul de la surcompensation étant toujours basé sur le changement temporel du changement temporel du paramètre manipulateur.

3. Méthode selon la revendication 1 ou 2, dans lequel le procédé est exécuté au début d'un cycle de travail du manipulateur.

4. Méthode selon l'une des revendications précédentes, dans lequel on détermine le changement temporel du paramètre manipulateur et / ou on détermine le changement temporel du changement temporel du paramètre manipulateur sur la base des paramètres détectés du manipulateur des cycles de travail précédents.

5. Méthode selon la revendication 1, dans lequel la surcompensation est supérieure à une différence entre un paramètre de manipulateur non corrigé et un paramètre de manipulateur idéal, de telle sorte que le paramètre de manipulateur corrigé est différent du paramètre de manipulateur idéal.

6. Utilisation d'une méthode selon l'une des revendications précédentes pour la correction de paramètres de manipulateur.

7. Système comprenant un manipulateur et un contrôleur configuré pour contrôler le manipulateur sur la base d'au moins un paramètre de manipulateur, dans lequel le système comprend en outre des moyens pour exécuter un procédé de correction du paramètre de manipulateur selon l'une quelconque des revendications 1 à 5.
